# EUROPEAN PATENT SPECIFICATION

(11) **EP 3 687 945 B1**
(45) Date of publication and mention of the grant of the patent: **08.06.2022**
(21) Application number: 18788943.1
(22) Date of filing: 24.09.2018
(51) Int. Cl.: C02F 1/68, C02F 1/72, A01N 37/16, C02F 103/00, C02F 103/02, C02F 103/10, C02F 103/18, C02F 103/28, C02F 103/32, C02F 103/36

(54) **METHOD OF BIOFILM INHIBITION IN WATER SYSTEMS**
VERFAHREN ZUR BIOFILMHEMMUNG IN WASSERBEHANDLUNGSSYSTEMEN
PROCÉDÉ POUR L'INHIBITION DE BIOFILM DANS DES SYSTÈMES DE TRAITEMENT DE L'EAU

(30) Priority: 25.09.2017 US 201762562591 P
(43) Date of publication of application: 05.08.2020
(60) Divisional application: 21211122.3
(73) Proprietor: Ecolab Usa Inc., St. Paul, MN 55102 (US)
(72) Inventor: FAST, Jonathan P., Saint Paul, Minnesota 55102 (US); LI, Junzhong, Saint Paul, Minnesota 55102 (US); BREWSTER, Allison, Saint Paul, Minnesota 55102 (US)
(74) Representative: Godemeyer Blum Lenze Patentanwälte Partnerschaft mbB - werkpatent
(86) International application number: PCT/US2018/052398
(87) International publication number: WO 2019/060814

(56) References cited:
- EP-A1- 2 984 929
- WO-A1-2009/027857
- US-A- 5 683 724
- US-A- 5 785 867

## Description

### FIELD OF THE INVENTION

The invention relates generally to the field of water treatment technologies and, more particularly, to a method for reducing and/or eliminating planktonic and sessile microbial populations in a water system.

### BACKGROUND OF THE INVENTION

Water systems are an integral part of process operations in many industries. For continuous plant productivity, these systems require proper treatment and preventative maintenance. In industrial and commercial water systems corrosion, scale, fouling and biological contamination are major issues which have to be taken into account to withstand significant problems. If not properly controlled, these problems have a direct, negative impact on the value of the entire process or operation.

Biofouling has always been problematic in commercial and industrial water systems, such as cooling tower waters and air washers, because it can adversely affect heat transfer efficiency and fluid frictional resistance, thereby subsequently reducing production rates. The fouling is caused by a biomass which is the buildup of microorganisms and/or extracellular substances and by dirt or debris that become trapped in the biomass. Bacteria, fungi, yeasts, diatoms and protozoa are only some of the organisms which cause buildup of a biomass. Biofouling is also a problem in pulp and paper mill systems because the growth of microorganisms in papermachine fluids can adversely affect finished paper products, thereby requiring the papermachine to be shut down, resulting in the loss of productivity brought on by the down time of the machine. Furthermore, biofouling plays an important role in microbiologically influenced corrosion.

The presence of microorganisms in commercial and industrial waters cannot be totally eliminated, even with the excessive use of chemical biocides. The most common way to control biofouling is through the application of chemical biocides such as chlorine (e.g. hypochlorite), bromine, isothiazolones, glutaraldehyde or other antimicrobials. The traditional metric for biocide efficacy in bulk solution systems is kill against microbes suspended in solution, so-called planktonic microbes. However, it is the microbes agglomerated on surfaces, biofilms, so-called sessile microbes, that significantly affect the process and operation of water systems.

Some microorganisms attach to inert surfaces forming aggregates with a complex matrix consisting of extracellular polymeric substances (EPS). This consortium of attached microorganisms and the associated EPS is commonly referred to as a biofilm. Biocides have difficulty penetrating biofilms and removing them from surfaces. Although excessive biocide dosages may be able to control biofouling, such use is costly.

Accordingly, it is an objective of the claimed invention to develop a method of inhibiting biofilm formation in commercial and industrial water systems which utilizes a low-cost, non-biocidal substance

EP 2 984 929 A1 describes stable percarboxylic acid compositions and uses thereof. It relates generally to stable percarboxylic acid compositions comprising,inter alia, at least two stabilizing agents, and various uses for water treatments, including water treatments in connection with oil- and gas-field operations.

US 5,785,867 describes a method and composition for inhibiting growth of microorganisms including peracetic acid and a non-oxidizing biocide.

### BRIEF SUMMARY OF THE INVENTION

An advantage of the invention is effective management or kill of both planktonic and sessile microorganisms in industrial and commercial water systems through the use of the peracid compositions described herein. As a result, the peracid compositions and methods of employing the same in water systems overcome a significant need in the art for improved sanitation methods which reduce or prevent microbe growth in suspension and on surfaces, e.g. biofilms. These and other unexpected benefits achieved by the present invention are disclosed herein.

The invention relates to a method for reducing and/or eliminating planktonic and sessile microbial populations in a water system comprising:
introducing a peracid composition into a vessel employed for water systems to sanitize the surface against unwanted bacterial agents , wherein the peracid composition is at a concentration in the water system of less than 15 ppm, wherein the peracid composition comprises a peracetic acid as a short chain peracid and a peroctanoic acid as a medium chain peracid and wherein the weight ratio of the short chain peracid and the medium chain peracid is 5:1 to 7:1.

### DETAILED DESCRIPTION OF THE PREFERRED EMBODIMENT

The present invention relates to a method for reducing and/or eliminating planktonic and sessile microbial populations in a water system.. For example, the peracid compositions of the invention are not only effective in reducing or preventing microbe growth in bulk solution but also is effective in reducing or preventing microbe growth on surfaces.

### Definitions

So that the present invention may be more readily understood, certain terms are first defined. Unless defined otherwise, all technical and scientific terms used herein have the same meaning as commonly understood by one of ordinary skill in the art to which embodiments of the invention pertain. Many methods and materials similar, modified, or equivalent to those described herein can be used in the practice of the embodiments of the present invention without undue experimentation, the preferred materials and methods are described herein. In describing and claiming the embodiments of the present invention, the following terminology will be used in accordance with the definitions set out below.

The term "about," as used herein, refers to variation in the numerical quantity that can occur, for example, through typical measuring techniques and equipment, with respect to any quantifiable variable, including, but not limited to, mass, volume, time, distance, wave length, frequency, voltage, current, and electromagnetic field. Further, given solid and liquid handling procedures used in the real world, there is certain inadvertent error and variation that is likely through differences in the manufacture, source, or purity of the ingredients used to make the compositions or carry out the methods and the like. The term "about" also encompasses amounts that differ due to different equilibrium conditions for a composition resulting from a particular initial mixture. The term "about" also encompasses these variations. Whether or not modified by the term "about," the claims include equivalents to the quantities.

The methods and compositions may comprise, consist essentially of, or consist of the components and ingredients as well as other ingredients described herein. As used herein, "consisting essentially of' means that the methods, systems, apparatuses and compositions may include additional steps, components or ingredients, but only if the additional steps, components or ingredients do not materially alter the basic and novel characteristics of the claimed methods, systems, apparatuses, and compositions.

The term "actives" or "percent actives" or "percent by weight actives" or "actives concentration" are used interchangeably herein and refers to the concentration of those ingredients involved in cleaning expressed as a percentage minus inert ingredients such as water or salts.

As used herein, the term "alkyl" or "alkyl groups" refers to saturated hydrocarbons having one or more carbon atoms, including straight-chain alkyl groups (e.g., methyl, ethyl, propyl, butyl, pentyl, hexyl, heptyl, octyl, nonyl, decyl, etc.), cyclic alkyl groups (or "cycloalkyl" or "alicyclic" or "carbocyclic" groups) (e.g., cyclopropyl, cyclopentyl, cyclohexyl, cycloheptyl, cyclooctyl, etc.), branched-chain alkyl groups (e.g., isopropyl, tert-butyl, sec-butyl, isobutyl, etc.), and alkyl-substituted alkyl groups (e.g., alkyl-substituted cycloalkyl groups and cycloalkyl-substituted alkyl groups).

Unless otherwise specified, the term "alkyl" includes both "unsubstituted alkyls" and "substituted alkyls." As used herein, the term "substituted alkyls" refers to alkyl groups having substituents replacing one or more hydrogens on one or more carbons of the hydrocarbon backbone. Such substituents may include, for example, alkenyl, alkynyl, halogeno, hydroxyl, alkylcarbonyloxy, arylcarbonyloxy, alkoxycarbonyloxy, aryloxy, aryloxycarbonyloxy, carboxylate, alkylcarbonyl, arylcarbonyl, alkoxycarbonyl, aminocarbonyl, alkylaminocarbonyl, dialkylaminocarbonyl, alkylthiocarbonyl, alkoxyl, phosphate, phosphonato, phosphinato, cyano, amino (including alkyl amino, dialkylamino, arylamino, diarylamino, and alkylarylamino), acylamino (including alkylcarbonylamino, arylcarbonylamino, carbamoyl and ureido), imino, sulfhydryl, alkylthio, arylthio, thiocarboxylate, sulfates, alkylsulfinyl, sulfonates, sulfamoyl, sulfonamido, nitro, trifluoromethyl, cyano, azido, heterocyclic, alkylaryl, or aromatic (including heteroaromatic) groups.

In some embodiments, substituted alkyls can include a heterocyclic group. As used herein, the term "heterocyclic group" includes closed ring structures analogous to carbocyclic groups in which one or more of the carbon atoms in the ring is an element other than carbon, for example, nitrogen, sulfur or oxygen. Heterocyclic groups may be saturated or unsaturated. Exemplary heterocyclic groups include, but are not limited to, aziridine, ethylene oxide (epoxides, oxiranes), thiirane (episulfides), dioxirane, azetidine, oxetane, thietane, dioxetane, dithietane, dithiete, azolidine, pyrrolidine, pyrroline, oxolane, dihydrofuran, and furan.

The term "antibiotic," as used herein, refers to a substance well known to skilled artisans that controls the growth of bacteria, fungi, or similar microorganisms, wherein the substance can be a natural substance produced by bacteria or fungi, or a chemically/biochemically synthesized substance (which may be an analog of a natural substance), or a chemically modified form of a natural substance.

The term "weight percent," "wt.%," "wt-%," "percent by weight," "% by weight," and variations thereof, as used herein, refer to the concentration of a substance as the weight of that substance divided by the total weight of the composition and multiplied by 100.

As used herein, the term "cleaning" refers to a method used to facilitate or aid in soil removal, bleaching, microbial population reduction, and any combination thereof. As used herein, the term "microorganism" refers to any noncellular or unicellular (including colonial) organism. Microorganisms include all prokaryotes. Microorganisms include bacteria (including cyanobacteria), spores, lichens, fungi, protozoa, virinos, viroids, viruses, phages, and some algae. As used herein, the term "microbe" is synonymous with microorganism.

As used herein, the term "disinfectant" refers to an agent that kills all vegetative cells including most recognized pathogenic microorganisms, using the procedure described in A.O.A.C. Use Dilution Methods, Official Methods of Analysis of the Association of Official Analytical Chemists, paragraph 955.14 and applicable sections, 15th Edition, 1990 (EPA Guideline 91-2). As used herein, the term "high level disinfection" or "high level disinfectant" refers to a compound or composition that kills substantially all organisms, except high levels of bacterial spores, and is effected with a chemical germicide cleared for marketing as a sterilant by the Food and Drug Administration. As used herein, the term "intermediate-level disinfection" or "intermediate level disinfectant" refers to a compound or composition that kills mycobacteria, most viruses, and bacteria with a chemical germicide registered as a tuberculocide by the Environmental Protection Agency (EPA). As used herein, the term "low-level disinfection" or "low level disinfectant" refers to a compound or composition that kills some viruses and bacteria with a chemical germicide registered as a hospital disinfectant by the EPA.

As used herein, the term "medium chain" refers to medium to shorter long chain carboxylic acid chains. While in some cases medium chain length can be defined as C5-C12, for purposes of this application, some shorter long chain carboxylic acid chains will be encompassed within the meaning of the term medium chain as used herein. Specifically, the term "medium chain" can encompass carboxylic acid chain lengths of between C5 and C22, preferably C5 and C18, more preferably C5 and C12. Chain lengths exceeding 22 carbons are not considered medium chain for the purposes of this application.

As used herein, the term "microorganism" refers to any noncellular or unicellular (including colonial) organism. Microorganisms include all prokaryotes. Microorganisms include bacteria (including cyanobacteria), spores, lichens, fungi, protozoa, virinos, viroids, viruses, phages, and some algae. As used herein, the term "microbe" is synonymous with microorganism.

As used herein, the terms "mixed" or "mixture" when used relating to "peroxycarboxylic acid composition" or "peroxycarboxylic acids" refer to a composition or mixture including more than one peroxycarboxylic acid, such as a composition or mixture including peroxyacetic acid (POAA) and peroxyoctanoic acid (POOA).

As used herein, the terms "peracid" or "peroxy acid" refer to an acid having the hydrogen of the hydroxyl group replaced by a hydroxy group. Oxidizing peracids are referred to herein as peroxycarboxylic acids.

As used herein the term "peracid forming composition" refers to a composition that produces a peracid when the components of the composition are combined. For example, in some embodiments, a peracid forming composition suitable for use in the present invention includes an organic acid and an oxidizing agent.

For the purpose of this patent application, successful microbial reduction is achieved when the microbial populations are reduced by at least about 50%, or by significantly more than is achieved by a wash with water. Larger reductions in microbial population provide greater levels of protection.

As used herein, the terms "sanitizer," "sanitize," and the like refer to an agent or action that reduces the number of bacterial contaminants in a particular location or source. In an embodiment, sanitizers for use in this herein will provide at least a 3-log reduction, more preferably a 4-log reduction, most preferably a 5-log order reduction of bacteria in a particular location or source. Preferably, the compositions and methods can meet the BACS test for industrial water. Differentiation of antimicrobial "-cidal" or "-static" activity, the definitions which describe the degree of efficacy, and the official laboratory protocols for measuring this efficacy are considerations for understanding the relevance of antimicrobial agents and compositions. Antimicrobial compositions can affect two kinds of microbial cell damage. The first is a lethal, irreversible action resulting in complete microbial cell destruction or incapacitation. The second type of cell damage is reversible, such that if the organism is rendered free of the agent, it can again multiply. The former is termed microbiocidal and the later, microbistatic. According to embodiments of the compositions and methods disclosed herein, the compositions and methods can provide in some instances cidal activity, and preferably act as a sanitizer; however, in other embodiments, the compositions and methods provide microbistatic action.

As used herein, the term "substantially free" refers to compositions completely lacking the component or having such a small amount of the component that the component does not affect the performance of the composition. The component may be present as an impurity or as a contaminant and shall be less than 0.5 wt-%. In another embodiment, the amount of the component is less than 0.1 wt-% and in yet another embodiment, the amount of component is less than 0.01 wt-%.

The term "substantially similar cleaning performance" refers generally to achievement by a substitute cleaning product or substitute cleaning system of generally the same degree (or at least not a significantly lesser degree) of cleanliness or with generally the same expenditure (or at least not a significantly lesser expenditure) of effort, or both.

As used herein, the term "sulfoperoxycarboxylic acid," "sulfonated peracid," or "sulfonated peroxycarboxylic acid" refers to the peroxycarboxylic acid form of a sulfonated carboxylic acid. In some embodiments, the sulfonated peracids are mid-chain sulfonated peracids. As used herein, the term "mid-chain sulfonated peracid" refers to a peracid compound that includes a sulfonate group attached to a carbon that is at least one carbon (e.g., the three position or further) from the carbon of the percarboxylic acid group in the carbon backbone of the percarboxylic acid chain, wherein the at least one carbon is not in the terminal position. As used herein, the term "terminal position," refers to the carbon on the carbon backbone chain of a percarboxylic acid that is furthest from the percarboxyl group.

As used herein, the term "waters" includes food process or transport waters. Food process or transport waters include produce transport waters (e.g., as found in flumes, pipe transports, cutters, slicers, blanchers, retort systems, washers, and the like), belt sprays for food transport lines, boot and hand-wash dip-pans, third-sink rinse waters, and the like. Waters also include domestic and recreational waters such as pools, spas, recreational flumes and water slides, fountains, and the like.

The methods, systems, apparatuses, and compositions may comprise, consist essentially of, or consist of the components and ingredients as well as other ingredients described herein. As used herein, "consisting essentially of' means that the methods, systems, apparatuses and compositions may include additional steps, components or ingredients, but only if the additional steps, components or ingredients do not materially alter the basic and novel characteristics of the claimed methods, systems, apparatuses, and compositions.

### Compositions

According to the invention a peracetic acid and a peroctanoic acid are employed for industrial and commercial water systems, namely to reduce and/or prevent biofilm growth.

In a further aspect, the peracid composition can also include an organic acid and an oxidizing agent. In various aspects, the peracid composition can be formed by an organic acid and an oxidizing agent. In other aspects, peracid forming compositions may be employed to generate a peracid composition in situ. Additional description of exemplary in situ methods for peracid forming compositions is provided in U.S. Patent Nos. 8,846,107 and 8,877,254.

The concentration of peracids employed in a peracid composition is suitable to replace standard water systems treatment compositions (e.g., hypochlorite or bromide). In an aspect, the concentration of peracids is sufficient to sanitize a water system or portion thereof. In a further aspect, the concentration of peracids is sufficient to control the problematic biofilms without reducing the process or operation of the water system.

In an aspect, peracid compositions are dosed based on the water system for treatment. For example, concentrations of peracid compositions suitable for use based on a cooling tower will differ than concentration used based on a paper mill. In a further aspect, peracid compositions are employed in a water system at a concentration of less than 15 ppm. In another aspect, peracid compositions can be employed in the water system at a concentration between about 1 ppm and about 15 ppm. In an embodiment of the invention, the peracid compositions can be employed in the water system at a concentration between about 6 ppm and about 12 ppm for biofilm control. In an embodiment of the invention, the peracid compositions can be employed in the water system at a concentration between about 1 ppm and about 5 ppm for controlling solution bacteria. Thus, it should be understood that in particular embodiments where both solution bacteria and biofilm control are desired, a higher concentration (e.g., about 6 ppm to about 12 ppm) may be employed to remove biofilm. Subsequent to removal, the system may employ a lower concentration of prevention of bacterial growth in the water system.

The pH of the compositions can vary depending on the water system that is being treated. However, it is generally expected that many, although not all, water systems treated with the compositions of the invention will have a pH between about 6 and about 10, more preferably a pH between about 7 and about 9.

### Peroxycarboxylic Acids

Peroxycarboxylic (or percarboxylic) acids generally have the formula R(CO₃H)ₙ, where, for example, R is an alkyl, arylalkyl, cycloalkyl, aromatic, or heterocyclic group, and n is one, two, or three, and named by prefixing the parent acid with peroxy. The R group can be saturated or unsaturated as well as substituted or unsubstituted. Peroxycarboxylic acids can be made by the direct action of an oxidizing agent on a carboxylic acid, by autoxidation of aldehydes, or from acid chlorides, and hydrides, or carboxylic anhydrides with hydrogen or sodium peroxide.

Peroxycarboxylic acids may include short chain and/or medium chain peroxycarboxylic acids. As used herein, a "short chain peracid" refers to a peroxycarboxylic acid having a carbon chain between 1 and 4 carbons. As used herein, the phrase "medium chain peracid" refers to a peroxycarboxylic acid having a carbon chain between 5 and 22 carbons in length. In the invention peracetic acid is used as short-chain peracid and peroctanoic acid is used as medium-chain peracid.

As used herein, the phrase "short chain peroxycarboxylic acid" refers to the peroxycarboxylic acid form of a short chain carboxylic acid (i.e., C1 to C4). Short chain peracids have the benefit of often being highly miscible in water at 25 °C. Peroxyacetic (or peracetic) acid is a peroxycarboxylic acid having the formula: CH₃COOOH. Generally, peroxyacetic acid is a liquid having an acrid odor at higher concentrations and is freely soluble in water, alcohol, ether, and sulfuric acid. Peroxyacetic acid can be prepared through any number of methods known to those of skill in the art including preparation from acetaldehyde and oxygen in the presence of cobalt acetate. A solution of peroxyacetic acid can be obtained by combining acetic acid with hydrogen peroxide.

According to the inventionperoxyacetic acid and peroxyoctanoic acid are utilized in combination in a ratio of 5:1 to 7:1, and most preferably about 6:1.

The method include peroxyoctanoic acid. Peroxyoctanoic (or peroctanoic) acid is a peroxycarboxylic acid having the formula, for example, of n-peroxyoctanoic acid: CH₃(CH₂)₆COOOH. Peroxyoctanoic acid can be an acid with a straight chain alkyl moiety, an acid with a branched alkyl moiety, or a mixture thereof. Peroxyoctanoic acid is surface active and can assist in wetting hydrophobic surfaces, such as those of microbes. Peroxyoctanoic acid can be prepared through any number of methods known to those of skill in the art. A solution of peroxyoctanoic acid can be obtained by combining octanoic acid and hydrogen peroxide.

In an aspect of the invention a commercially-available peroxyoctanoic acid containing product is available under the commercial name Octave^{®} (Ecolab, Inc.). Additional description of particularly suitable peroxyoctanoic acids is disclosed in U.S. Patent Nos. 7,498,051, 7,504 123, 7,507,429 and 7,569,232.

There is an additional unexpected benefit of employing a peroxyoctanoic acid in combination with peracetic acid according to an embodiment of the invention. Interestingly, the addition of a medium chain peracid (e.g. peroctanoic acid) to a short chain peracid (e.g., peracetic acid) provides no benefit for microbial kill in solution. However, the combination of a short and medium chain peracid was surprisingly found to provide a significant benefit for the inhibition of bacteria growth on surfaces in water systems, i.e. biofilms.

### Solubilizer

The present peracid compositions can include a solubilizer. The present invention relates to solubilizers for peroxyoctanoic acid. In an embodiment, the solubilizer can increase or maintain the solubility in the composition. The present compositions and methods can include any of a variety of suitable solubilizers. For example, the solubilizer can include a solvent, a surfactant, or a mixture thereof as disclosed herein. Further description of solubilizers particularly well suited for use with peroxyoctanoic acid compositions is found in U.S. Patent Nos. 7,498,051 and 7,569,232.

### Solvent

The peracid compositions may be liquids. Therefore, in some embodiments, the compositions of the invention further include a solvent or solubilizer. In some embodiments, the solvent is water. The water may be provided by the use of aqueous reagents, viz. oxidizing agent. In other embodiments, an additional amount of water is added to the peracid compositions.

The liquid composition according to the present invention is a composition including more than 10 wt-% water but less than 90 wt-%. The amount of water included in the liquid composition can be for example, less than about 80 wt-%, less than about 70 wt-%, and less than about 60 wt-% by weight of the liquid composition. In some embodiments, the composition can contain water between about 5 wt-% and about 50 wt- %, about 10 wt-% and about 40 wt-%, or about 30 wt-%. It is to be understood that all values and ranges between these values and ranges are encompassed by the methods of the present invention.

Alternatively, the compositions may be free of or substantially free of any added water. A non-aqueous solvent may also be used in the compositions. For example, in some embodiments, an alcohol is included as a solvent in the compositions. In some embodiments, a liquid composition of the invention is substantially non-aqueous (or anhydrous) in character. The term "substantially non-aqueous" as used herein means that while very small amounts of water may be incorporated into such preferred compositions, the amount of water in the non-aqueous liquid detergent compositions of the invention are less than about 30 wt-% of the composition. In some embodiments, the water content of the non-aqueous compositions will include less than about 10 wt-% by weight.

The compositions may include an effective amount of solvent. The compositions may include about 10 wt-% to about 99 wt-% of a solvent, or about 20 wt-% to about 80 wt-% of a solvent. The compositions may include more than about 30 wt-%, more than about 50 wt-%, more than about 60 wt-% or more than 70% of a solvent. It is to be understood that all values and ranges between these values and ranges are encompassed by the present invention.

### Additional Functional Ingredients

The peracid compositions may also include additional functional ingredients. Additional functional ingredients suitable for use in the present compositions include, but are not limited to, scale inhibitors, corrosion inhibitors, anionic polymers, stabilizing agents, surfactants, acidulants, hydrotropes, dispersants, antimicrobial agents (e.g. hypochlorite, bromide and the like), solidification agent, aesthetic enhancing agent (*i.e*., colorant (*e.g*., pigment), odorant, or perfume), wetting agents, defoaming agents, thickening or gelling agents, among any number of constituents which can be added to the composition. Such adjuvants can be preformulated with the peracid compositions or added to the compositions after formation, but prior to use. The compositions can also contain any number of other constituents as necessitated by the application, which are known and which can facilitate the activity of the present compositions.

### Stabilizer

Stabilizers (also referred to as "stabilizing agents") are commonly added to equilibrium peracid compositions to stabilize the peracid and hydrogen peroxide and prevent the decomposition of these constituents. Examples of stabilizing agents may include for example, surfactants, couplers, hydrotropes, acid catalysts and the like that are conventionally used in equilibrium peracid compositions to stabilize and improve shelf life of the composition. Further examples of stabilizing agents include, for example, chelating agents or sequestrants. Such sequestrants include, but are not limited to, organic chelating compounds that sequester metal ions in solution, particularly transition metal ions. Such sequestrants include organic amino- or hydroxy-polyphosphonic acid complexing agents (either in acid or soluble salt forms), carboxylic acids (*e.g*., polymeric polycarboxylate), hydroxycarboxylic acids, aminocarboxylic acids, or heterocyclic carboxylic acids, *e.g.,* pyridine-2,6-dicarboxylic acid (dipicolinic acid). Dipicolinic acid, 1-hydroxy ethylidene-1,1-diphosphonic acid (CH₃C(PO₃H₂)₂OH) (HEDP) are further example of stabilizing agents.

Additional examples of stabilizing agents commonly used in equilibrium chemistry to stabilize the peracid and hydrogen peroxide and/or prevent the premature oxidation of the composition include phosphonic acid or phosphonate salt. Phosphonic acids and phosphonate salts include HEDP; ethylenediamine tetrakis methylenephosphonic acid (EDTMP); diethylenetriamine pentakis methylenephosphonic acid (DTPMP); cyclohexane-1,2-tetramethylene phosphonic acid; amino[tri(methylene phosphonic acid)]; (ethylene diamine[tetra methylene-phosphonic acid)]; 2-phosphene butane-1,2,4-tricarboxylic acid; or salts thereof, such as the alkali metal salts, ammonium salts, or alkyloyl amine salts, such as mono, di, or tetra-ethanolamine salts; picolinic, dipicolinic acid or mixtures thereof. In some embodiments, organic phosphonates, *e.g.*, HEDP are well known as used stabilizing agents.

Stabilizers can be added to the peracid composition. Preferably the stabilizer is in the peracid composition in a concentration of between about 100 ppm and about 5 wt.%.

### Surfactant

The peracid compositions may include a surfactant. Surfactants may be included as a solubilizer for the peracid compositions (*e.g.* microemulsion forming surfactant). Surfactants suitable for use with the compositions include, but are not limited to, anionic surfactants, nonionic surfactants, cationic surfactants, amphoteric surfactants, zwitterionic surfactants, mixtures thereof, or the like.

The solubilizer can include a microemulsion forming surfactant. Suitable microemulsion forming surfactants include anionic surfactants, cationic surfactants, amphoteric surfactants, zwitterionic surfactants, mixtures thereof, or the like. Suitable microemulsion forming surfactants include anionic surfactants, such as sulfate surfactant, sulfonate surfactant, phosphate surfactant (phosphate ester surfactant), and carboxylate surfactant, mixtures thereof, or the like.

### Methods

The methods employing the peracid compositions are suitable for various applications in industrial or commercial water systems, namely water recirculating systems. For example, it is contemplated that the peracid compositions are suitable for system sanitation (*e.g.* tank/vessel sanitation).

The methods of treating microbial populations are effective for killing one or more of the pathogenic bacteria associated biofilm production and/or biofouling. Such bacteria include a wide variety of microorganisms, such as aerobic and anaerobic bacteria, including Gram positive and Gram negative bacteria, yeast, molds, bacterial spores, viruses, etc.

The method of the invention employs peracid for reducing and/or eliminating microbial populations in a water system maintain water system operations and performance. Water systems include, but are not limited to, cooling systems, including, but not limited to cooling towers, cooling basins, and reactor cooling systems; food, beverage and industrial process waters; pulp and paper mill systems; brewery pasteurizers; sweetwater systems; air washer systems; oil field drilling fluids and muds; petroleum recovery processes; industrial lubricants; cutting fluids; heat transfer systems; gas scrubber systems; latex systems; clay and pigment systems; decorative fountains; water intake pipes; ballast water tanks; and ship reservoirs.

According to the invention a peracid composition is introduced into a vessel or system/apparatus employed for water systems to sanitize the surface against unwanted bacterial agents. The introduction of the peracid composition is employed for hard surface cleaning and sanitizing, which may include clean-in-place systems (CIP) and/or clean-out-of-place systems (COP). For water system processes, COP systems may include for example readily accessible systems including tanks/vessels, removable system parts, and the like. For water system processes, CIP systems may include the internal components of tanks, lines, pumps and other process equipment used for processing typically liquid product streams. Beneficially, the treatment of the various CIP and/or COP portions of the system are uniquely suited to the water systems which rely heavily on internal recycling water. Such internal recycling is well suited to the methods of the invention employing peracid compositions as these compositions that have sufficient longevity and compatibility with the water system source/materials.

According to the invention the peracid composition is introduced (*e.g.* injected) into a water systems vessel (*i.e.* cooling tank). The peracid composition is introduced upstream from a cooling tank. Such introduction may further be in combination with traditional cleaning and sanitation practices that are routinely performed on the water system tank. The introduction of a peracid composition upstream from a water systems tank may be combined without CIP and/or CIP systems described herein.

In a further aspect, the peracid composition (or a portion thereof) remains in the vessel or water system instead of being drained therefrom. The amount of peracid composition remaining in the vessel may vary according to the desired level of sanitization and dependent upon the stability of the peracid composition.

It is to be understood that the methods may employ an aqueous or non-aqueous peracid composition. In addition, either a concentrate or use concentration of the peracid compositions can be applied to or brought into contact with an object by any conventional method or apparatus for applying an antimicrobial or cleaning compound to an object, such as disclosed for example in applications of use described in U.S. Patent No. 7,507,429. For example, the object can be wiped with, sprayed with, poured on, foamed on, and/or immersed in the compositions, or a use solution made from the compositions. The compositions can be sprayed, foamed, or wiped onto a surface; the compositions can be caused to flow over the surface, or the surface can be dipped into the compositions. These and other methods of contacting an object or a surface with the peracid composition are within the scope of the invention. Contacting can be manual or by machine.

The onsite production of the peracid composition is also included within the scope of the invention. Exemplary methods and/or apparatus for producing certain peracid compositions are disclosed for example in U.S. Patent Nos. 8,889,900, 8,858,895, 8,729,296, 8,846,107, 8,933,263 and 8,877,254.

The methods may include the introduction of the peracid compositions at a temperature in the range of about 4 °C to 60 °C. After introduction of the peracid composition, the peracid (*e.g.* solution) is held in the vessel and/ or circulated throughout the system for a time sufficient for sanitization (*e.g*., to kill undesirable microorganisms).

The contact time can vary based upon the concentration of the peracid compositions, method of applying the peracid compositions, temperature conditions, amount of soil, microorganisms or contamination on the surface or apparatus to be treated, or the like. The peracid compositions may be retained in the water system. In some aspects of the invention, the exposure time can be at least about 5 seconds, at least about 15 seconds, or more. The exposure time is at least a few minutes to a few hours. After the surfaces have been sanitized by means of the peracid compositions, the solution may be removed (*e.g.* drained from the system) or retained (in whole or in part) in the system for additional sanitizing benefit.

The method of the invention may further employ pressure and/or mechanical action with the application of the peracid composition. As one of skill in the art will appreciate, mechanical action may include for example, agitation, rubbing, brushing, etc. Agitation can be by physical scrubbing of the surface (*e.g.* tank), through the action of the spray solution under pressure, through sonication, or by other methods. Agitation increases the efficacy of the spray solution in killing micro-organisms, perhaps due to better exposure of the solution into the crevasses or small colonies containing the micro-organisms. The spray solution, before application, can also be heated to a temperature of about 15 to 20°C, for example, about 20 to 60°C to increase efficacy.

The commercial and industrial water systems to which the peracid compositions may be added to inhibit planktonic and sessile microorganism formation include cooling waters; food, beverage and industrial process waters; pulp and paper mill systems; brewery pasteurizers; sweetwater systems; air washer systems; oil field drilling fluids and muds; petroleum recovery processes; industrial lubricants; cutting fluids; heat transfer systems; gas scrubber systems; latex systems; clay and pigment systems; decorative fountains; water intake pipes; ballast water tanks; and ship reservoirs, among others.

### EXAMPLES

Embodiments of the present invention are further defined in the following nonlimiting Examples. It should be understood that these Examples, while indicating certain embodiments of the invention, are given by way of illustration only. From the above discussion and these Examples, one skilled in the art can ascertain the essential characteristics of this invention can make various changes and modifications of the embodiments of the invention to adapt it to various usages and conditions.

A mixed bacterial population representative of industrial cooling towers was grown overnight in 10% tryptic soy broth (TSB) and this bacterial population was diluted with a test water source as described in the different examples below such that it provided in an amount to achieve a total bacterial population of about 6.5 log in each tested water.

### EXAMPLE 1

### Antimicrobial Efficacy in Suspension

The traditional metric for biocide efficacy in industrial water systems is the ability of a composition to kill against a suspension of microbes within a bulk solution. Therefore, an experiment was performed to determine the bactericidal efficacy of a composition according to the present invention, as compared to a peracetic acid or peroctanoic acid only control. A phosphate buffered dilution water was used at a 1/10 dilution ratio for diluting the bacterial population. The diluted bacterial population was then added to test water at a ratio of 1:500 to achieve a bacterial population near 6.5 log in the test water. Three different peracid systems were tested and dosed at 2 ppm total peracid concentration to the test water source as described above. Composition A comprises a peroctanoic acid (POOA) only system. Composition B comprises peracetic acid (POAA) only system. Composition C comprises a mixed peracetic acid/peroctanoic acid system, where the ratio between peracids is 6:1 POAA:POOA. The peracid systems were dosed at time 0 at 35 °C with no subsequent biocide redosing after the initial dose. The bacteria population was measured at multiple time intervals over the next 24 hours. The results of those measurements are provided in Table 1 demonstrating the antimicrobial properties of each composition.

**Table 1 - Bacterial Survivors on a log10 scale.**

| **Time (min.)** | **Untreated Control** | **Composition A** | **Composition B** | **Composition C** |
|---|---|---|---|---|
| 0 | 6.25 | 6.53 | 6.25 | 6.5 |
| 10 | 6.18 | 6.34 | 6.16 | 6.2 |
| 30 | 6.30 | 6.23 | 4.97 | 4.7 |
| 60 | 6.32 | 6.08 | 4.69 | 3.3 |
| 120 | 6.28 | 5.69 | 2.85 | 3.4 |
| 240 | 6.20 | 5.59 | 2.00 | 2.0 |
| 1440 | 6.41 | 6.87 | 2.00 | 2.3 |

As can be seen from this table, after 4 hours composition B was effective at killing everything down to the level of quantification, while the total bacterial population within the untreated control group remained constant. Note that the bacteria populations were not enumerated below 2 log survivors. Further, there was no regrowth observed above the 2-log threshold at the 24 hr. timepoint under treatment with composition B. Composition A had very little efficacy, with a maximum reduction seen of only 1 log with clear regrowth at 24 hrs. With composition A only providing little benefit on its own, it is reasonable that composition C would not show significant improvement over composition B. That is the case, composition C performed in a similar manner as composition B but did not show an improvement in microbial efficacy over composition B. Composition C still reached maximum kill at 4 hrs., but in contrast to composition B, there was some regrowth seen at 24 hrs.

### EXAMPLE 2

### Biofilm Inhibition

In contrast to the testing of Example 1, where kill efficiency was measured, here the ability of biocides to inhibit biofilm growth on surfaces was assessed. It was observed in the laboratory that there are bacteria that can grow at water-air/water-surface interfaces despite of biocide treatment at certain concentrations. Moreover, it has been reported many times that biofilms and slimes do form in well-treated water systems. These observations suggested that the slime-forming bacterial sector is not well understood or controlled.

For this study, the same phosphate buffered diluted bacterial population source as utilized in Example 1 was used. That diluted population was added to water from two different power plants to achieve a bacterial population near 6.5 log for testing; the ratio of diluted bacterial population to test water was about 1:500. The water obtained from the power plants was more alkaline at time 0 compared to the laboratory water and was not buffered. The first water source was a power plant cooling basin, referred to as Power Plant A throughout this example. The water source in Power Plant A had a starting pH of 8.4, limited turbidity and a natural bacterial population of 10⁴. This slightly alkaline pH allowed the pH to drop after the addition of the acidic peracids systems. The Power Plant A water also contained more organic contaminants, i.e. total suspended solids than the lab water tested in Example 1; this led to turbidity and could potentially lead to more consumption of the biocides.

The peracids (compositions B or C) were added at concentration intervals of 3 ppm, i.e. 3, 6, 9, 12 and 15 ppm. At the completion of the test the biofilms were stained with a dye. The intensity of the color directly correlates with dye uptake into the biofilm and is a measure of biofilm growth. No color was an indication that no biofilm was present, i.e. that the growth was fully inhibited. The ability of each composition to inhibit biofilm formation is shown below in Table 2.

**Table 2 - Biofilm inhibition in Power Plant A (starting at pH 8.4)**

| | **Concentration (ppm)** | | |
|---|---|---|---|
| | **Some Growth** | **Full Inhibition** | **pH range** |
| **Composition B** | 9 | 12 | 7.0-7.7 |
| **Composition C** | 3 | 6 | 7.5-8.0 |

As can be seen, a mixed peracid system (composition C) is between 2-3x better at biofilm inhibition than composition B (POAA only). It should also be pointed out that typically peracids have more microbial efficacy at lower pH. Composition B is more acidic than composition C and thus lowers the pH further from the 8.4 starting point. The benefit to the mixed peracid system is even more striking when considering it doesn't have the presumed advantage of less alkaline pH.

This result was verified with a second different industrial water source Power Plant B, which had a starting pH of 8.65 and visible suspended dirt, i.e., a higher turbidity than the water source in Power Plant A, which was already higher than the lab water. Similar to the water source in the power plant A, this industrial water source had a natural bacterial population of 10⁴. Thus, the phosphate buffered diluted bacterial population was added to the water source from Power Plant B to achieve a bacterial population of near 6.5 log; the ratio of diluted bacterial population to test water was again about 1:1500. The results for the testing of the water source from Power Plant B are shown below in Table 3.

**Table 3 - Biofilm inhibition in Power Plant B (starting pH 8.65)**

| | **Concentration (ppm)** | | |
|---|---|---|---|
| **Compositions** | **Some Growth** | **Full Inhibition** | **pH range** |
| **Composition B** | 9 | 12 | 7.8 at 6 ppm |
| **Composition C** | 3 | 6 | 8.1 at 6 ppm |

Despite the more alkaline pH and the increased level of impurities, the biofilm inhibition results were exactly the same in this second water source. Composition C (mixed peracid system) was again 2-3x better at biofilm inhibition than composition B (POAA only system).

Overall, this biofilm inhibition result is surprising since composition C had almost no impact on bacteria kill in solution. Yet it is clear the addition of a medium-chain, more hydrophobic peracid provides synergistic benefit to inhibit biofilm growth on surfaces. Without wishing to be bound by theory, this is likely due to the increased surface attraction the less water soluble peracid has. Therefore, this effect should be replicated by any sparingly water soluble organic peracid.

## Claims

1. A method for reducing and/or eliminating planktonic and sessile microbial populations in a water system comprising:
introducing a peracid composition into a vessel employed for water systems to sanitize the surface against unwanted bacterial agents , wherein the peracid composition is at a concentration in the water system of less than 15 ppm, wherein the peracid composition comprises a peracetic acid as a short chain peracid and a peroctanoic acid as a medium chain peracid and wherein the weight ratio of the short chain peracid and the medium chain peracid is 5:1 to 7:1.

2. The method of any one of claim 1, wherein the peracid composition is in the form of a water solution.

3. The method of any one of claims 1-2, wherein said water system is one or more of the following cooling system; food, beverage and industrial process waters; pulp and paper mill systems; brewery pasteurizers; sweetwater systems; air washer systems; industrial lubricants; cutting fluids; heat transfer systems; gas scrubber systems; latex systems; clay and pigment systems; decorative fountains; water intake pipes; ballast water tanks; and ship reservoirs.

4. The method of any one of claims 1-3, wherein the water system is a cooling system.

5. The method of claim 4, wherein the water system is a cooling tower or cooling basin.

## Patentansprüche

1. Verfahren zum Reduzieren und/oder Eliminieren von planktonischen und sessilen Mikrobenpopulationen in einem Wassersystem, das Folgendes umfasst:
Einführen einer Persäurezusammensetzung in ein Gefäß, das für Wassersysteme verwendet wird, um die Oberfläche gegen unerwünschte bakterielle Mittel zu desinfizieren, wobei die Persäurezusammensetzung in dem Wassersystem in einer Konzentration von weniger als 15 ppm vorliegt, wobei die Persäurezusammensetzung eine Peressigsäure als eine kurzkettige Persäure und eine Peroctansäure als eine mittelkettige Persäure umfasst, und wobei das Gewichtsverhältnis der kurzkettigen Persäure und der mittelkettigen Persäure 5 : 1 bis 7 : 1 beträgt.

2. Verfahren nach Anspruch 1, wobei die Persäurezusammensetzung in der Form einer Wasserlösung vorliegt.

3. Verfahren nach einem der Ansprüche 1-2, wobei das Wassersystem Folgendes ist:
ein Kühlsystem; Lebensmittel-, Getränke- und industrielle Betriebswasser; Zellstoff- und Papierfabriksysteme; Pasteurisierer für Brauereien; Süßwassersysteme;
Luftwäschersysteme; industrielle Schmiermittel; Schneidflüssigkeiten;
Wärmeübertragungssysteme; Gaswäschersysteme; Latexsysteme; Ton- und Pigmentsysteme; dekorative Springbrunnen; Wassereinlassrohre; Ballastwassertanks; und/oder Schiffsreservoirs.

4. Verfahren nach einem der Ansprüche 1-3, wobei das Wassersystem ein Kühlsystem ist.

5. Verfahren nach Anspruch 4, wobei das Wassersystem ein Kühlturm oder ein Kühlbecken ist.

## Revendications

1. Procédé de réduction et/ou d'élimination de populations microbiennes planctoniques et sessiles dans un système d'eau comprenant :
l'introduction d'une composition de peracide dans un récipient utilisé pour les systèmes d'eau afin de désinfecter la surface contre les agents bactériens indésirables, la composition de peracide étant à une concentration dans le système d'eau de moins de 15 ppm, la composition de peracide comprenant un acide peracétique en tant que peracide à chaîne courte et un acide peroctanoïque en tant que peracide à chaîne moyenne et le rapport pondéral du peracide à chaîne courte et du peracide à chaîne moyenne étant de 5:1 à 7:1.

2. Procédé selon l'une quelconque de la revendication 1, dans lequel la composition de peracide est sous la forme d'une solution aqueuse.

3. Procédé selon l'une quelconque des revendications 1 à 2, dans lequel ledit système d'eau est un ou plusieurs des systèmes de refroidissement suivants ; eaux de traitement d'aliments, de boissons et industrielles ; systèmes d'usines de pâtes et de papiers ; pasteurisateurs de brasserie ; systèmes d'eau douce ; systèmes de laveurs d'air ; lubrifiants industriels ; fluides de coupe ; systèmes de transfert de chaleur ; systèmes d'épuration de gaz ; systèmes de latex ; systèmes d'argile et de pigments ; fontaines décoratives ; tuyaux de prise d'eau ; réservoirs d'eau de ballast ; et réservoirs de navires.

4. Procédé selon l'une quelconque des revendications 1 à 3, dans lequel le système d'eau est un système de refroidissement.

5. Procédé selon la revendication 4, dans lequel le système d'eau est une tour de refroidissement ou un bassin de refroidissement.
